# EUROPÄISCHE PATENTSCHRIFT

(11) **EP 2 230 159 B1**
(45) Veröffentlichungstag und Bekanntmachung des Hinweises auf die Patenterteilung: **27.02.2013**
(21) Anmeldenummer: 09015091.3
(22) Anmeldetag: 05.12.2009
(51) Int. Cl.: B62D 25/16, B62D 35/00, B62D 37/02, B60K 13/04, F21V 31/03

(54) **Verkleidungsteil in einem Kotflügel eines Kraftfahrzeugs mit strömungstechnischer Verbindung zu einer Scheinwerfereinheit**
Trim element in a vehicle fender with a flow technical connection with a headlight unit
Elément d'habillage dans une aile de véhicule ayant une connection technique pour écoulement de fluide vers un projecteur

(30) Priorität: 21.03.2009 DE 102009014368
(43) Veröffentlichungstag der Anmeldung: 22.09.2010
(73) Patentinhaber: Dr. Ing. h.c. F. Porsche AG, 70435 Stuttgart (DE)
(72) Erfinder: Grammer, Martin, 71640 Ludwigsburg (DE); Sander, Holger, 71272 Renningen (DE)

(56) Entgegenhaltungen:
- EP-A1- 1 236 953
- EP-A1- 1 762 428
- DE-A1- 3 138 360
- DE-A1- 19 838 950
- DE-A1- 19 929 245
- FR-A1- 2 804 745
- GB-A- 2 069 120
- US-A- 6 071 000

## Beschreibung

Die Erfindung betrifft ein Verkleidungsteil für ein Kraftfahrzeug mit einem Kotflügel gemäß dem Oberbegriff des Patentanspruchs 1.

Aus dem Serienfahrzeugbau ist es bekannt, hinter dem Radkasten im Kotflügel eine Aussparung vorzusehen, die mittels einer Verkleidung dekorativ abgedeckt ist und die zum Belüften von Antriebsmaschinen, beispielsweise Verbrennungsmotoren, vorgesehen sind.

Aus der DE 10 2005 042 688 A1 ist es zudem bekannt, in das Verkleidungsteil einen Blinker oder dergleichen zu integrieren.

Aus der gattungsgemäßen EP 1 762 428 A1 ist ein Verkleidungsteil für eine Aussparung im Kotflügel bekannt, das eine von aussen sichtbare Blende und ein von innen die Blende an der Aussparung haltendes Schließteil umfasst.

Die Aufgabe der Erfindung besteht darin, die Funktionalität eines derartigen Verkleidungsteils weiter zu erhöhen.

Die Aufgabe wird erfindungsgemäß mit den Merkmalen des Patentanspruchs 1 gelöst.

Vorteilhafte Ausgestaltungen der Erfindung ergeben sich aus den Merkmalen der abhängigen Ansprüche.

Die prinzipielle Idee der Erfindung besteht darin, das Druckgefälle zwischen einer durch eine Abrisskante einer Aussparung, die in einen Kotflügel eingebracht ist, und dem an einer in Fahrtrichtung vorgelagerten Scheinwerfereinheit oder sonst. Beleuchtungssystem anliegenden Druck auszunutzen. Dazu ist ein Verkleidungsteil zur Verkleidung der Aussparung vorgesehen, das gleichzeitig mit der Scheinwerfereinheit strömungstechnisch, beispielsweise über einen Entlüftungsschlauch, verbunden ist. Beim Fahrbetrieb liegt an der Einströmöffnung der Scheinwerfereinheit ein höherer Druck als an der Aussparung im Kotflügel an. Dieses Druckgefälle ist ausreichend, um ein Beschlagen des Scheinwerfers wirksam zu minimieren und eine Enttauung/Entlüftung zu beschleunigen.

In einer bevorzugten Ausgestaltung der Erfindung kann die strömungstechnische Verbindung durch einen Schlauch hergestellt werden, der ein Anschlussstück an dem Schließteil mit der ohnehin an der Scheinwerfereinheit vorgesehenen Entlüftungsöffnung verbindet.

Um die Strömung von der Entlüftungsöffnung zur Abrisskante zu unterstützen, können das Schließteil und die Blende zumindest im Nahbereich des Anschlussstücks einen Kanal bilden.

Aus fertigungstechnischen Gründen kann der die Aussparung bildende Randbereich des Kotflügels von einer umlaufenden Verprägung gebildet sein.

Die Blende kann damit mit ihrem umlaufenden Randbereich an der Verprägung in Einbaulage anliegen.

Zur Positionierung der Blende in Fahrzeuglängsrichtung können X-Positionierrippen vorgesehen sein, die eine reproduzierbare Montage ermöglichen.

Ferner können zur Positionierung der Blende in Fahrzeughochrichtung Z-Positionierrippen vorgesehen sein, die mit entsprechenden Anschlägen der Aussparung zusammenwirken und eine Verschiebung in Fahrzeughochrichtung unterbinden.

Für eine werkzeuglose Montage wird vorgeschlagen, dass das Schließteil mit seinen Haltelaschen an Rasthaken der Blende (10) verrastet.

Eine vorteilhafte Ausgestaltung der Erfindung wird im Folgenden anhand der Zeichnung näher erläutert. Dabei zeigen:
- Figur 1: eine Seitenansicht eines Vorderwagens eines Kraftfahrzeuges,
- Figur 2: eine Ansicht der Rückseite des Kotflügels gemäß Figur 1 mit einer in die Aussparung einer Verprägung eingesetzten Blende,
- Figur 3: ein Detail A gemäß Figur 2,
- Figur 4: ein Detail B gemäß Figur 2,
- Figur 5: eine Ansicht der Rückseite des Kotflügels gemäß Figur 1 mit eingesetzter Blende und Schließteil,
- Figur 6: ein Detail C gemäß Figur 5,
- Figur 7: ein Detail D gemäß Figur 5 in verrasteter Einbaulage sowie
- Figur 8: das Detail D gemäß Figur 7 in Demontageposition.

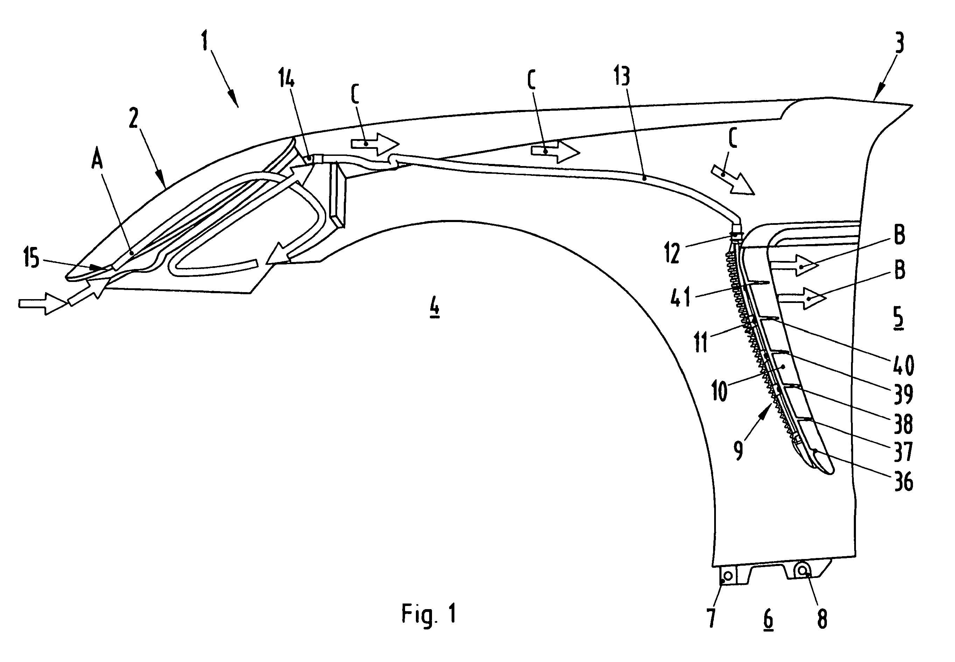

Figur 1 zeigt eine Seitenansicht eines Vorderwagens 1 eines nicht weiter dargestellten Kraftfahrzeuges. Im vorderen Bereich des Vorderwagens 1 ist eine Scheinwerfereinheit 2 angeordnet. Dahinter schließt sich ein Kotflügel 3 an. Der Kotflügel 3 erstreckt sich über einen Radkasten 4 bis zur nicht dargestellten A-Säule 5. Nach unten ist der Kotflügel 3 an den ebenfalls nicht dargestellten Türschweller 6 mit zwei Befestigungslaschen 7 und 8 angeschlossen.

In den Kotflügel 3 ist hinter dem Radkasten 4 eine längliche Verprägung 9 mit einer in Figur 1 nicht erkennbaren Aussparung eingebracht, die mit einer Blende 10 dekorativ verkleidet ist.

Die Blende 10 ist mittels eines Schließteils 11 an der Aussparung der Verprägung 9 gehalten. Auf die Ausgestaltung der Blende 10 und des Schließteils 11 sowie deren Montage wird weiter unten näher eingegangen.

Das Schließteil 11 ist an seinem oberen Ende mit einem Anschlussstück 12 versehen, das vorzugsweise angeformt ist.

An das Anschlussstück 12 lässt sich ein vorzugsweise flexibler Schlauch 13 oder ein Formrohr anschließen, der wiederum an einer Entlüftungsöffnung 14 der Scheinwerfereinheit 2 angeschlossen ist. Die Scheinwerfereinheit 2 weist darüber hinaus eine Lufteinlassöffnung auf. Um ein Beschlagen innerhalb der Scheinwerfereinheit zu minimieren, ist eine Durchströmung der Scheinwerfereinheit 2 gemäß Pfeilrichtung A von der Lufteinlassöffnung 15 zur Entlüftungsöffnung 14 erwünscht.

Beim Fahren des Kraftfahrzeuges ergibt sich aufgrund der durch die Verprägung 9 gebildete Abrisskante ein Unterdruck im Bereich der Verprägung 9, der mit Pfeilen B schematisch dargestellt ist. An der vorderen Lufteinlassöffnung 15 der Scheinwerfereinheit 2 ergibt sich im Fahrbetrieb ein höherer Druck. Das daraus resultierende Druckgefälle zwischen der Lufteinlassöffnung 15 und der Verprägung 9 wird ausgenutzt, um eine Strömung im Schlauch 13 gemäß Pfeilrichtung C zu erzeugen, so dass die Scheinwerfereinheit 2 gemäß Pfeilrichtung A durchströmt wird. Es hat sich gezeigt, dass diese Durchströmung ausreichend ist, um ein Beschlagen der Scheinwerfereinheit von innen wirksam zu minimieren.

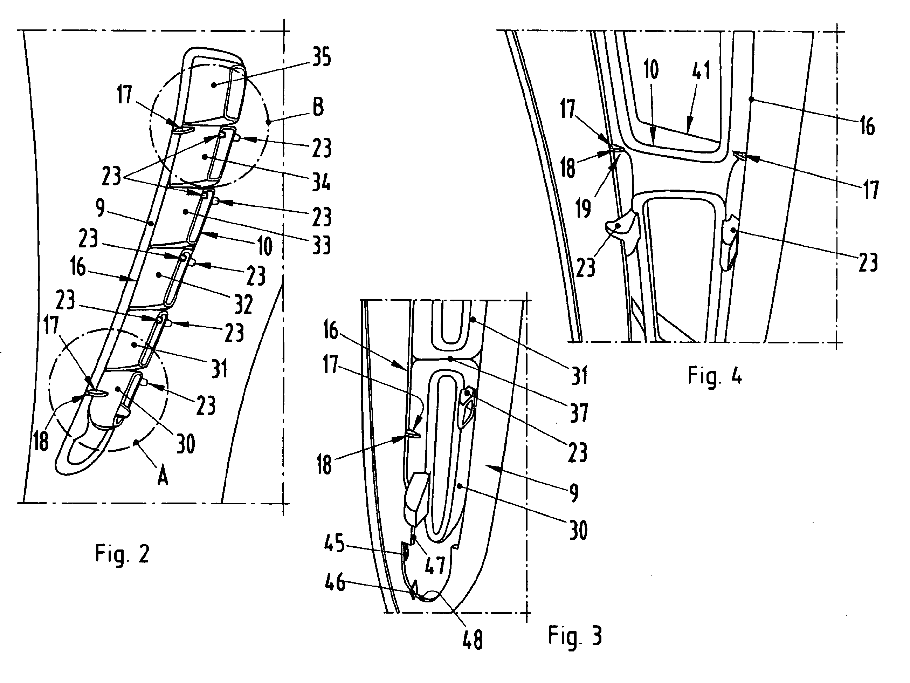

Die Montage von der Blende 10 und dem Schließteil 11 wird im Folgenden anhand der Figuren 2 bis 8 näher erläutert.

Die Verprägung 9 umfasst wie oben bereits erwähnt eine Aussparung 16. In die Aussparung 16 der Verprägung 9 wird die Blende 10 durch einen Werker von außen eingesetzt. Die Blende 10 weist mehrere übereinander angeordnete und aneinander anschließende Hohlprofile 30 bis 35 auf. Die Hohlprofile 30 bis 35 sind durch einen umlaufenden Rahmen 36 miteinander verbunden, der an der Verprägung 9 anliegt. Die Hohlprofile 30 bis 35 sind durch Rippen 37 bis 41 voneinander getrennt.

Zur Positionierung der Blende 10 in Fahrzeuglängsrichtung (X) sind an der Blende 10 X-Positionierrippen 17 vorgesehen. Jede Positionierrippe 17 verfügt über eine Auflaufschräge 18 und eine Rastnase 19. Beim Einsetzen wird die Auflaufschräge 18 über die Kante der Aussparung 16 geschoben und verrastet mit der Rastnase 19 dahinter.

Ferner sind an der Blende 10 Z-Positionsrippen vorgesehen, die eine Verschiebung der Blende 10 in Fahrzeughochrichtung (Z) begrenzen. Dazu ist eine obere Z-Positionsrippe 45 und eine untere Z-Positionsrippe 46 vorgesehen, die jeweils mit einem an der Aussparung 16 ausgebildeten Anschlag 47 bzw. 48 zusammenwirken.

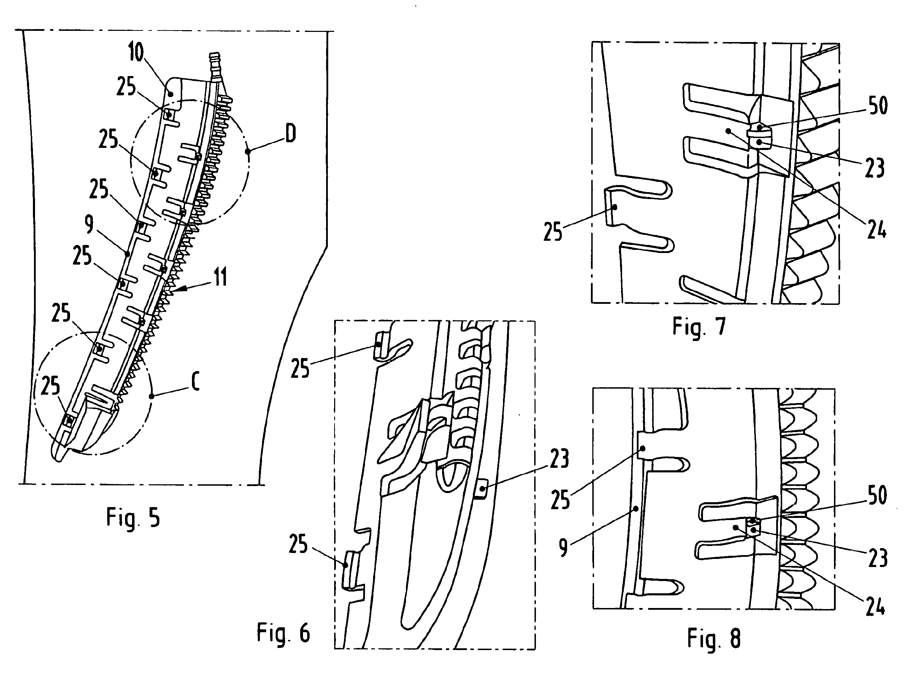

Von der rückwärtigen Seite der Blende 10 stehen mehrere Rasthaken 23 in Richtung Schließteil 11 ab. Das Schließteil 11 bildet zusammen mit der Blende 10 zumindest im oberen Bereich einen Kanal, der in dem Anschlussstück 12 mündet. Für die Befestigung des Schließteils 11 an der Blende 10 sind mit den Rasthaken 23 korrespondierende Haltelaschen 24 vorgesehen, die in Einbaulage durch die Rasthaken 23 gehalten werden. Die Rasthaken 23 sind einseitig mit einer Nase 50 versehen, die die Haltelasche 24 in Einbaulage (vgl. Fig. 7) hintergreift, so dass ein sicheres Verrasten des Schließteils 11 auf der Blende 10 gewährleistet ist.

Zum Toleranzausgleich in Fahrzeuglängsrichtung (X) sind an dem Schließteil 11 an dessen der Aussparung 16 zugewandten Seite nachgiebige Stützfüße 25 vorgesehen, die sich gegen die Verprägung 9 beim Verrasten abstützen.

Da die Rasthaken 23 der Blende 10 nur einseitig mit einer Nase 50 ausgeführt sind, gelangen die Nasen 50 beim vertikalen Verschieben des Schließteils 11 nach unten aus dem Eingriff mit der Haltelasche 24 des Schließteils 11. Das Schließteil 11 kann anschließend entgegen der Fahrtrichtung (X) abgenommen werden. Somit ist eine zerstörungsfreie Demontage des Schließteils 11 möglich.

## Patentansprüche

1. Kraftfahrzeug mit einem Kotflügel (3), der ein Verkleidungsteil zur Verkleidung einer in dem Kotflügel (3) eingebrachten Aussparung (16) umfasst, wobei das Verkleidungsteil durch eine von außen sichtbare Blende (10) und ein von innen die Blende (10) an der Aussparung (16) haftendes Schließteil (11) gebildet ist,
**dadurch gekennzeichnet,**
**dass** eine strömungstechnische Verbindung zwischen dem Schließteil (11) und/oder der Blende (10) und einer Scheinwerfereinheit oder Leuchteneinheit (2) vorgesehen ist, wobei die strömungstechnische Verbindung durch einen Schlauch oder ein Formrohr (13) gebildet ist, wobei der Schlauch oder das Formrohr (13) an ein Anschlussstück (12) des Verkleidungsteils und an eine Entlüftungsöffnung (14) der Scheinwerfereinheit oder Leuchteneinheit (2) angeschlossen ist.

2. Kraftfahrzeug nach Anspruch 1,
**dadurch gekennzeichnet,**
**dass** das Anschlussstück (12) an dem Schließteil (11) vorgesehen ist.

3. Kraftfahrzeug nach Anspruch 2,
**dadurch gekennzeichnet,**
**dass** das Schließteil (11) und die Blende (10) zumindest im Nahbereich des Anschlussstücks (12) einen Kanal bilden.

4. Kraftfahrzeug nach einem der vorgenannten Ansprüche,
**dadurch gekennzeichnet,**
**dass** der die Aussparung (16) bildende Randbereich des Kotflügels (3) von einer Verprägung (9) gebildet ist.

5. Kraftfahrzeug nach Anspruch 4,
**dadurch gekennzeichnet,**
**dass** die Blende (10) mit ihrem umlaufenden Randbereich (36) an der Verprägung (9) in Einbaulage anliegt.

6. Kraftfahrzeug nach Anspruch 5,
**dadurch gekennzeichnet,**
**dass** zur Positionierung der Blende (10) in Fahrzeuglängsrichtung X-Positionierrippen (17) vorgesehen sind.

7. Kraftfahrzeug nach einem der Ansprüche 5 oder 6,
**dadurch gekennzeichnet,**
**dass** zur Positionierung der Blende (10) in Fahrzeughochrichtung Z-Positionierrippen (45, 46) vorgesehen sind.

8. Kraftfahrzeug nach einem oder mehreren der vorgenannten Ansprüche,
**dadurch gekennzeichnet,**
**dass** das Schließteil (11) mit Haltelaschen (24) an Rasthaken (23) der Blende (10) verrastbar ist.

## Claims

1. Motor vehicle with a wing (3) which comprises a trim element for covering a recess (16) introduced into the wing (3), wherein the trim element is formed by a panel (10) which is visible from the outside and by a closing part (11) holding the panel (10) against the recess (16) from the inside, **characterized in that** a fluidic connection is provided between the closing part (11) and/or the panel (10) and a headlight unit or lamp unit (2), wherein the fluidic connection is formed by a hose or a shaped tube (13), wherein the hose or the shaped tube (13) is connected to a connecting piece (12) of the trim element and to a vent hole (14) in the headlight unit or lamp unit (2).

2. Motor vehicle according to Claim 1, **characterized in that** the connecting piece (12) is provided on the closing part (11).

3. Motor vehicle according to Claim 2, **characterized in that** the closing part (11) and the panel (10) form a channel at least in the vicinity of the connecting piece (12).

4. Motor vehicle according to one of the preceding claims, **characterized in that** that edge region of the wing (3) which forms the recess (16) is formed by an embossing (9).

5. Motor vehicle according to Claim 4, **characterized in that** the panel (10) bears with the peripheral edge region (36) thereof against the embossing (9) in the fitted position.

6. Motor vehicle according to Claim 5, **characterized in that** X-positioning ribs (17) are provided for positioning the panel (10) in the longitudinal direction of the vehicle.

7. Motor vehicle according to either of Claims 5 and 6, **characterized in that** Z-positioning ribs (45, 46) are provided for positioning the panel (10) in the vertical direction of the vehicle.

8. Motor vehicle according to one or more of the preceding claims, **characterized in that** the closing part (11) is latchable by means of retaining tabs (24) to latching hooks (23) of the panel (10).

## Revendications

1. Véhicule automobile comprenant une aile (3) qui comporte un élément d'habillage pour l'habillage d'un évidement (16) ménagé dans l'aile (3), l'élément d'habillage étant formé par un bandeau (10) visible depuis l'extérieur et par un élément de fermeture (11) retenant, depuis l'intérieur, le bandeau (10) sur l'évidement (16),
**caractérisé en ce**
**qu'**une liaison fluidique est prévue entre l'élément de fermeture (11) et/ou le bandeau (10) et un ensemble de phare ou un ensemble de feu (2), la liaison fluidique étant formée par un tuyau ou un tube moulé (13), le tuyau ou le tube moulé (13) étant raccordé à une pièce de raccordement (12) de l'élément d'habillage et à une ouverture d'aération (14) de l'ensemble de phare ou de l'ensemble de feu (2).

2. Véhicule automobile selon la revendication 1,
**caractérisé en ce que**
la pièce de raccordement (12) est prévue sur l'élément de fermeture (11).

3. Véhicule automobile selon la revendication 2,
**caractérisé en ce que**
l'élément de fermeture (11) et le bandeau (10) forment un canal au moins à proximité de la pièce de raccordement (12).

4. Véhicule automobile selon l'une quelconque des revendications précédentes,
**caractérisé en ce que**
la région de bord, formant l'évidement (16), de l'aile (3) est formée par une empreinte (9).

5. Véhicule automobile selon la revendication 4,
**caractérisé en ce que**
le bandeau (10) s'applique, par le biais de sa région de bord périphérique (36), contre l'empreinte (9) dans la position d'installation.

6. Véhicule automobile selon la revendication 5,
**caractérisé en ce que**
des nervures de positionnement X (17) sont prévues pour le positionnement du bandeau (10) dans la direction longitudinale du véhicule.

7. Véhicule automobile selon la revendication 5 ou 6,
**caractérisé en ce que**
des nervures de positionnement Z (45, 46) sont prévues pour le positionnement du bandeau (10) dans la direction verticale du véhicule.

8. Véhicule automobile selon l'une ou plusieurs des revendications précédentes,
**caractérisé en ce que**
l'élément de fermeture (11) peut être encliqueté, à l'aide de pattes de retenue (24), sur des crochets d'encliquetage (23) du bandeau (10).
